# EUROPÄISCHE PATENTSCHRIFT

(11) **EP 1 282 776 B1**
(45) Veröffentlichungstag und Bekanntmachung des Hinweises auf die Patenterteilung: **15.06.2005**
(21) Anmeldenummer: 01937991.6
(22) Anmeldetag: 08.05.2001
(51) Int. Cl.: F04B 53/12, F04B 53/10

(54) **RÜCKSCHLAGVENTIL FÜR EINE KOLBENPUMPE**
CHECK VALVE FOR A PISTON PUMP
CLAPET ANTIRETOUR POUR POMPE A PISTON

(30) Priorität: 10.05.2000 DE 10022808
(43) Veröffentlichungstag der Anmeldung: 12.02.2003
(73) Patentinhaber: ROBERT BOSCH GMBH, 70442 Stuttgart (DE)
(72) Erfinder: SCHULLER, Wolfgang, 74343 Sachsenheim (DE); SCHUMANN, Beate, 74357 Boennigheim (DE)
(86) Internationale Anmeldenummer: PCT/DE2001/001721
(87) Internationale Veröffentlichungsnummer: WO 2001/086148

(56) Entgegenhaltungen:
- WO-A-99/40323
- DE-A- 1 653 459
- DE-A- 2 855 541
- DE-A- 3 329 652
- DE-A- 4 107 979
- DE-A- 19 732 810

## Beschreibung

Die Erfindung betrifft ein Rückschlagventil für eine Kolbenpumpe nach dem Oberbegriff des Anspruchs 1. Ein derartiges Rückschlagventil ist aus der DE 41 07 979 A bekannt. Bei dem bekannten Rückschlagventil ist der Ventilschließkörper als Kugel ausgebildet und wird von einem Federkörper gegen den Ventilsitz gedrückt. Der ringscheibenförmig ausgebildete Federkörper weist dabei radial nach innen verlaufende Blattfederzungen auf, welche die Kugel teilweise übergreifen.

Aus der DE 197 32 810 A ist es ferner bekannt, ein mit einer Kugel ausgestattetes Rückschlagventil mittels einer Scheibenfeder auszustatten, an welches sich die Kugel anliegt bzw. mit deren Hilfe die Kugel gegen den Ventilsitz gedrückt wird. Dabei liegt die Scheibenfeder lediglich umfangsseitig auf einem relativ schmalen Rand auf.

Die DE 16 53 459 A zeigt ein Rückschlagventil, bei der der Ventilschließkörper mittels einer in Form einer Schraubenfeder ausgebildeten Ventilfeder gegen seinen Ventilsitz gedrückt wird. Die Ventilfeder ist von einem Halteelement gehalten, welches somit ein separates Bauteil ausbildet.

Aufgabe der Erfindung ist es, ein Rückschlagventil mit einer Ventilschließfeder derart auszubilden, das die Ventilschließfeder den Ventilschließkörper vollständig übergreift und somit eine besonders sichere Führung des Ventilschließkörpers ermöglicht.

Diese Aufgabe wird bei einem Rückschlagventil für eine Kolbenpumpe mit den kennzeichnenden Merkmalen des Anspruchs 1 gelöst.

Die Unteransprüche haben vorteilhafte Ausgestaltungen und Weiterbildungen der im Anspruch 1 angegebenen Erfindung zum Gegenstand.

Die Ausbildung des Ventilschließkörper gemäß Anspruch 3 als scheibenförmiges Bauteil hat den Vorteil, dass das Rückschlagventil beim Öffnen schnell einen großen Durchströmquerschnitt freigibt, wodurch das Rückschlagventil gute dynamische Eigenschaften aufweist.

Das erfindungsgemäße Rückschlagventil ist als Ein- oder Auslassventil einer Kolbenpumpe und insbesondere zur Anbringung an einer Stirnseite eines Kolbens der Kolbenpumpe vorgesehen. Die Kolbenpumpe ist erfindungsgemäß insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfasst oder bei der die Pumpe zum Füllen eines Speichers der Bremsanlage dient.

### Zeichnung

Die Erfindung wird nachfolgend anhand eines in der Zeichnung dargestellten, bevorzugt ausgewählten Ausführungsbeispiels näher erläutert. Es zeigen:
- Figur 1: einen Achsschnitt einer Kolbenpumpe mit einem Rückschlagventil gemäß der Erfindung; und
- Figur 2: das Rückschlagventil aus Figur 1 in Seitenansicht in größerer Darstellung;

### Beschreibung des Ausführungsbeispiels

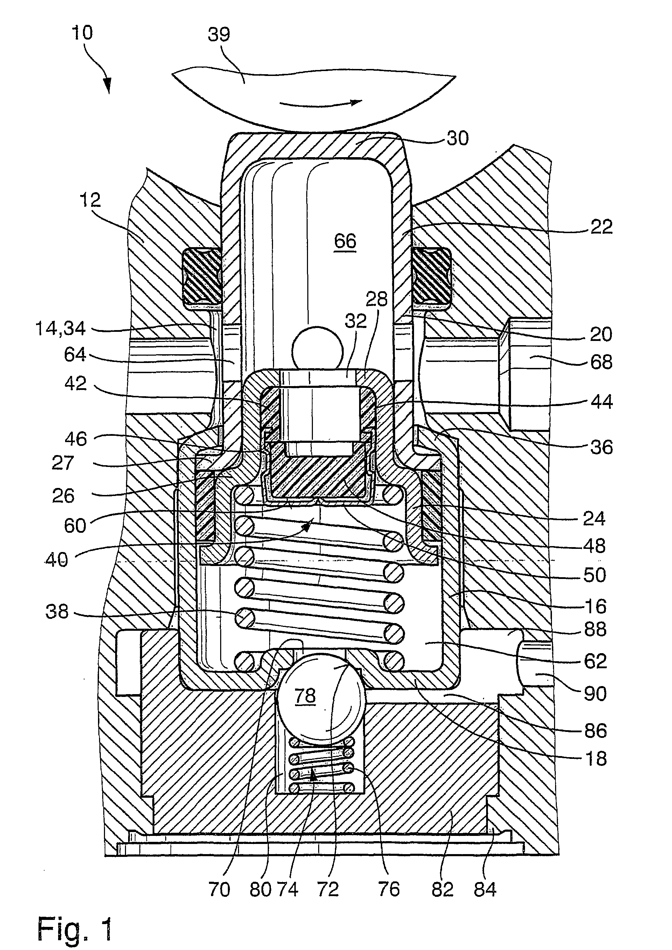

Die in Figur 1 dargestellte Kolbenpumpe 10 ist in einen Hydraulikblock 12 eingesetzt, der ein Pumpengehäuse bildet und nachfolgend als solches bezeichnet wird. Der Hydraulikblock 12, von dem in der Zeichnung lediglich ein die Kolbenpumpe 10 umgebendes Bruchstück dargestellt ist, enthält eine hydraulische Steuerschaltung einer im übrigen nicht dargestellten, schlupfgeregelten Fahrzeugbremsanlage. In den Hydraulikblock 12 sind außer der Kolbenpumpe 10 weitere, nicht dargestellte hydraulische Bauelemente wie Magnetventile eingesetzt und hydraulisch miteinander verschaltet.

Der das Pumpengehäuse 12 bildende Hydraulikblock ist mit einer gestuften Pumpenbohrung 14 versehen, in die eine topfförmige Laufbuchse 16 eingesetzt ist, die einen mit ihr einstückigen Laufbuchsenboden 18 aufweist. Die Laufbuchse 16 ist durch Tiefziehen aus einem Metallblech hergestellt. Ein Kolben 20 der Kolbenpumpe 10 der auf einem Teil seiner Länge in der Laufbuchse 16 und auf einem anderen, aus der Laufbuchse 16 vorstehenden Teil seiner Länge in der Pumpenbohrung 14 axial verschieblich geführt ist. Die Pumpenbohrung 14 und die Laufbuchse 16 bilden eine Kolbenführung 14, 16.

Der Kolben 20 ist im wesentlichen aus zwei Teilen zusammengesetzt, er weist ein becherförmiges Außenteil 22 auf, in das ein topfförmiges Innenteil 24 über etwa die Hälfte seiner axialen Länge eingepresst ist. Das Außenteil 22 und das Innenteil 24 sind als Umformteile durch Tiefziehen aus einem Metallblech hergestellt. Das Innenteil 24 weist eine Ringstufe 26 auf, mit der es an einer Ringstufe 27 des Außenteils 22 anliegt. Das Innenteil 24 weist auf einer Stirnseite eine mit ihm einstückige Stirnwand 28 auf. Ebenso weist das Außenteil 22 eine mit ihm einstückige Stirnwand 30 auf. Eine offene Seite des Innenteils 24 ist dem Außenteil 22 abgewandt. Die Stirnwand 28 des Innenteils 24 ist mit einem Mittelloch 32 zum Durchlass von Bremsflüssigkeit versehen. Zur Erhöhung der Verschleißfestigkeit ist das Außenteil 22 zumindest im Bereich seiner Stirnwand 30 gehärtet, eine sonstige Bearbeitung erfolgt nicht, eine Oberflächengüte des Innen- und des Außenteils 22, 24 ist ausreichend.

Die in Figur 1 dargestellte Kolbenpumpe 10 ist als Stufenkolbenpumpe ausgebildet. Dies bedeutet, der Kolben 20 ist in der Laufbuchse 16 auf einem größeren Durchmesser geführt und abgedichtet als außerhalb der Laufbuchse 16 in der Pumpenbohrung 14 im Pumpengehäuse 12. Durch die Ausbildung als Stufenkolbenpumpe weist die Kolbenpumpe 10 einen den Kolben 20 umgebenden Ringraum 34 in der Pumpenbohrung 14 bzw. in der Laufbuchse 16 auf. Ein Volumen dieses Ringraums 34 ändert sich während einer hin- und hergehenden Hubbewegung des Kolbens 20 und bewirkt ein Ansaugen von Bremsflüssigkeit auch während eines Förderhubs des Kolbens 20 der Kolbenpumpe 10.

Ein freier Rand 36 der Laufbuchse 16 ist nach innen umgebördelt, er hält den Kolben 20 an der Ringstufe 27 seines Außenteils 22 in der Laufbuchse 16. Eine Kolbenrückstellfeder 38, die als Schraubendruckfeder ausgebildet ist, ist in die Laufbuchse 16 eingesetzt. Die Kolbenrückstellfeder 38 stützt sich am Laufbuchsenboden 18 ab und drückt gegen die Ringstufe 26 des Innenteils 24 des Kolbens 20 im Innern des Kolbens 20. Die Kolbenrückstellfeder 38 drückt den Kolben 20 gegen den Umfang eines elektromotorisch rotierend antreibbaren Exzenters 39, der auf der aus der Laufbuchse 16 vorstehenden Stirnseite des Kolbens 20 angeordnet ist. Durch rotierenden Antrieb des Exzenters 39 wird der Kolben 20 zu einer axial hin- und hergehenden Hubbewegung angetrieben.

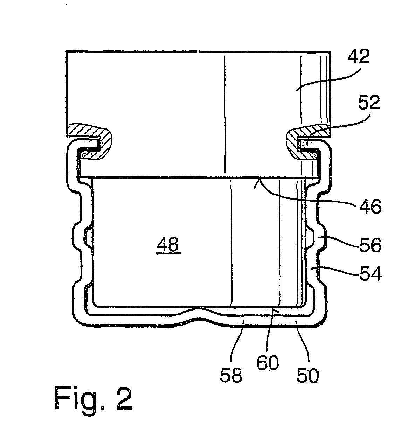

An dem in der Laufbuchse 16 befindlichen Ende des Kolbens 20 ist ein erfindungsgemäßes Rückschlagventil 40 angebracht, das in Vergrößerung in Figur 2 dargestellt ist. Das Rückschlagventil 40 weist ein hohlzylindrisches Ventilsitzteil 42 auf, mit dem es in das becherförmige Innenteil 24 des Kolbens 20 eingepresst ist. Dadurch entsteht zwischen dem Rückschlagventil 34 und dem Kolben 20 eine Klemmpassung 44, die das Rückschlagventil 40 im Innenteil 24 des Kolbens 20 hält. Das Ventilsitzteil 42 des erfindungsgemäßen Rückschlagventils 40 liegt an der mit dem Mittelloch 32 zum Durchlass von Bremsflüssigkeit versehenen Stirnwand 28 des Innenteils 24 des Kolbens 20 an. Ein der Stirnwand 94 abgewandter Stirnrand des Ventilsitzteils 42 bildet einen Ventilsitz 46 des Rückschlagventils 40. Auf der Seite des Ventilsitzes 46 des Ventilsitzteils 42 ist ein zylindrischer oder kreisscheibenförmiger Ventilschließkörper 48 des Rückschlagventils 34 angeordnet. Das Ventilsitzteil 42 und der Ventilschließkörper 48 sind als Kunststoffspritzteile hergestellt.

Der Ventilschließkörper 48 wird von einem Federbügel 50 übergriffen, der eine Ventilschließfeder des Rückschlagventils 40 bildet. Der Federbügel 50 ist aus einem Blechstreifen gebogen. Zur Befestigung am Ventilsitzteil 42 sind die beiden Enden des Federbügels 50 rechtwinklig nach innen umgebogen, sie bilden Rastelemente 52, die in Ausnehmungen im Außenumfang des Ventilsitzteils 42 eingreifen. Achsparallel entlang des Außenumfangs des Ventilschließkörpers 48 verlaufende Schenkel 54 des Federbügels 50 sind mit einer Wellung 56 versehen, um die Schenkel 54 in ihrer Längsrichtung federelastisch dehnen zu können. Zusätzliche Federelastizität weist der Federbügel 50 durch die elastische Biegbarkeit seines Jochs 58 auf, das über die dem Ventilsitzteil 42 abgewandter Stirnfläche 60 des Ventilschließkörpers 48 hinweg verläuft.

Der Federbügel 50 hält und führt den Ventilschließkörper 48 am Ventilsitzteil 42, er begrenzt einen Ventilhub des Rückschlagventils 40, also die Strecke, um die der Ventilschließkörper 48 vom Ventilsitz 46 abhebbar ist, und er drückt den Ventilschließkörper 48 mit geringer Vorspannkraft gegen den Ventilsitz 46, so dass Rückschlagventil 40 im Grundzustand geschlossen ist und bei einer geringen Druckdifferenz in Durchströmungsrichtung öffnet. Das erfindungsgemäße Rückschlagventil gibt schnell einen großen Strömungsquerschnitt frei, was für das Ansaugverhalten der Kolbenpumpe 10 wichtig ist (Dynamik).

Die Klemmpassung 44 zwischen dem Ventilsitzteil 42 und dem Innenteil 24 des Kolbens 20 sorgt dafür, dass keine Bremsflüssigkeit unter Umgehung des Rückschlagventils 40 aus einem einem Pumpenraum 62 zurück in das Außenteil des Kolbens 20 strömen kann. Zusätzlich hält die Klemmpassung 44 das Rückschlagventil 40 nicht nur während des Betriebs der Kolbenpumpe 10, sondern bereits vor und während des Zusammenbaus der Kolbenpumpe 10 fest am Kolben 20. Dadurch wird der Aufwand für das Herstellen der Kolbenpumpe 10 insgesamt wesentlich verringert.

Das erfindungsgemäße Rückschlagventil 34 bildet ein Einlassventil der Kolbenpumpe 10. Zum Einlass von Bremsflüssigkeit sind Einlassöffnungen 64 in einer Umfangswand des Außenteils 22 des Kolbens 20 der Kolbenpumpe 10 angebracht. Durch die Einlassöffnungen 64 kommuniziert ein Innenraum 66 des Außenteils 24 des Kolbens 20 mit dem das Außenteil umgebenden Ringraum 34 in der Pumpenbohrung 14. In den Ringraum 34 mündet eine Einlassbohrung 68, die radial zur Pumpenbohrung 14 im Pumpengehäuse 12 angebracht ist. Aus dem Innenraum 66 des Außenteils 22 des Kolbens 20 gelangt die Bremsflüssigkeit durch das Mittelloch 32 in der Stirnwand 28 des Innenteils 24 zu dem das Einlassventil der Kolbenpumpe 10 bildenden erfindungsgemäßen Rückschlagventil 40.

Ein Auslass aus dem Pumpenraum 62 der Kolbenpumpe 10 erfolgt durch ein Mittelloch 70 im Laufbuchsenboden 18, wobei ein auf einer Außenseite des Laufbuchsenbodens 18 befindlicher Lochrand des Mittellochs 70 einen Ventilsitz 72 eines Auslassventils 74 der Kolbenpumpe 10 bildet. Das Auslassventil 74 ist als federbeaufschlagtes Rückschlagventil ausgebildet. Eine Schraubendruckfeder als Ventilschließfeder 76 drückt eine einen Ventilschließkörper bildende Ventilkugel 78 gegen den Ventilsitz 72. Die Ventilkugel 78 und die Ventilschließfeder 76 sind in ein axiales Sackloch 80 in einem zylinderförmigem Verschlussstopfen 82 eingesetzt, der auf den Laufbuchsenboden 18 aufgesetzt ist. Der Verschlussstopfen 82 ist mit einer umlaufenden Verstemmung 84 des Pumpengehäuses 12 in der Pumpenbohrung 14 befestigt und druckfest abgedichtet. Der Auslass von durch das Auslassventil 74 ausströmender Bremsflüssigkeit erfolgt durch sternförmig angeordnete Radialkanäle 86 zwischen dem Verschlussstopfen 82 und dem Laufbuchsenboden 18 in einen die Laufbuchse 16 umschließenden Ringkanal 88 im Pumpengehäuse 12 und von dort durch eine radial zur Pumpenbohrung 14 im Pumpengehäuse 12 angebrachte Auslassbohrung 90.

## Patentansprüche

1. Rückschlagventil (40) für eine Kolbenpumpe (10), mit einem einen Ventilsitz (46) aufweisenden Ventilsitzteil (42), mit einem Ventilschließkörper (48), der mit dem Ventilsitz (46) zusammenwirkt, und mit einer Ventilschließfeder, die den Ventilschließkörper (48) gegen den Ventilsitz (46) drückt, wobei die Ventilschließfeder als Federbügel (50) ausgebildet ist, der den Ventilschließkörper (48) übergreift, der am Ventilsitzteil (42) befestigt ist und der den Ventilschließkörper (48) beweglich in dem Ventilsitzteil (42) verbindet, **dadurch gekennzeichnet, dass** der Federbügel (50) ein über die dem Ventilsitz (46) abgewandte Stirnfläche des Ventilschließkörpers (48) hinweg verlaufendes Joch (58) und umgebogene, entlang des Außenumfangs des Ventilschließkörpers (48) verlaufende, mit einer Wellung (56) versehene Schenkel (54) aufweist.

2. Rückschlagventil nach Anspruch 1, **dadurch gekennzeichnet, dass** der Federbügel (50) Rastelemente (52) aufweist, die in Ausnehmungen des Ventilsitzteils (42) eingreifen.

3. Rückschlagventil nach Anspruch 1, **dadurch gekennzeichnet, dass** der Ventilschließkörper (48) scheibenförmig ausgebildet ist.

4. Rückschlagventil nach Anspruch 3, **dadurch gekennzeichnet, dass** das Ventilsitzteil (52) rohrförmig ausgebildet ist und einen planen Ventilsitz (46) aufweist.

## Claims

1. Non-return valve (40) for a piston pump (10), with a valve-seat part (42) having a valve seat (46), with a valve-closing body (48) which co-operates with the valve seat (46), and with a valve-closing spring which presses the valve-closing body (48) against the valve seat (46), the valve-closing spring being designed as a spring clip (50) which engages over the valve-closing body (48) and is fastened to the valve-seat part (42) and which connects the valve-closing body (48) movably in the valve-seat part (42), **characterized in that** the spring clip (50) has a yoke (58) running over that end face of the valve-closing body (48) which faces away from the valve seat (46) and bent-round legs (54) running along the outer circumference of the valve-closing body (48) and provided with a corrugation (56).

2. Non-return valve according to Claim 1, **characterized in that** the spring clip (50) has latching elements (52) which engage into recesses of the valve-seat part (42).

3. Non-return valve according to Claim 1, **characterized in that** the valve-closing body (48) is of disc-shaped design.

4. Non-return valve according to Claim 3, **characterized in that** the valve-seat part (52) is of tubular design and has a plane valve seat (46).

## Revendications

1. Clapet anti-retour (40) pour une pompe à piston (10), comportant :
- une partie de siège de clapet (42) présentant un siège de clapet (46),
- un corps de fermeture de clapet (48) qui coopère avec le siège de clapet (46),
- un ressort de fermeture de clapet qui pousse le corps de fermeture de clapet (48) contre le siège de clapet (46), le ressort de fermeture de clapet étant configuré sous la forme d'un étrier de fixation (50) qui dépasse du corps de fermeture de clapet (48), qui est fixé à la partie de siège de clapet (42) et qui relie de façon mobile le corps de fermeture de clapet (48) à la partie de siège de clapet (42),
**caractérisé en ce que**
l'étrier de fixation (50) présente une armature (58) s'étendant sur la surface frontale du corps de fermeture de clapet (48) opposée au siège de clapet (46) et des branches (54) courbées, pourvues d'une vague (56), et s'étendant le long du pourtour extérieur du corps de fermeture de clapet (48).

2. Clapet anti-retour selon la revendication 1,
**caractérisé en ce que**
l'étrier de fixation (50) présente des éléments d'arrêt (52) qui s'engrènent dans des évidements de la partie de siège de clapet (42).

3. Clapet anti-retour selon la revendication 1,
**caractérisé en ce que**
le corps de fermeture de clapet (48) est configuré en forme de disque.

4. Clapet anti-retour selon la revendication 3,
**caractérisé en ce que**
la partie de siège de clapet (52) est configurée en forme de tube et présente un siège de clapet plan (46).
